# EUROPEAN PATENT APPLICATION

(11) **EP 1 035 243 A1**
(43) Date of publication of application: **13.09.2000**
(21) Application number: 99103940.5
(22) Date of filing: 08.03.1999
(51) Int. Cl.: D03D 47/27, F16H 55/06

(54) **Toothed wheel, particularly for weaving looms and the like**

(71) Applicant: B.C. & Sons Trading Ltd., London W1R 9FB (GB)
(72) Inventor: Munoz y Calderan, Xavier, La Massana, Andorra (AD)
(74) Representative: Modiano, Guido, Dr.-Ing.

(57) **Abstract**

A toothed wheel (1), particularly for weaving looms and the like, comprising a disk-like element around which a toothed ring (4) is arranged. The particularity of the invention lies in the fact that the toothed ring (4) is made of metallic material and is embedded in the disk-like element, so as to allow metal teeth (5) of the toothed ring (4) to protrude in order to constitute the teeth of the toothed wheel (1).

## Description

The present invention relates to a toothed wheel, particularly for weaving looms and the like.

It is known that weaving looms and the like use toothed wheels, known as sprockets, which currently have a large diameter; in some cases the toothed wheel is made of metal and light alloys, in other cases it is entirely made of synthetic resins and in still other cases the synthetic resin teeth are encapsulated with metal caps or laminas embedded in the resin that constitutes the toothed wheel in order to avoid early wear of the resin teeth of the toothed wheel.

However, the above-described solutions entail drawbacks arising from the fact that the synthetic resin causes the toothed wheel to have a considerable weight, lack shape permanence and have considerable inertia.

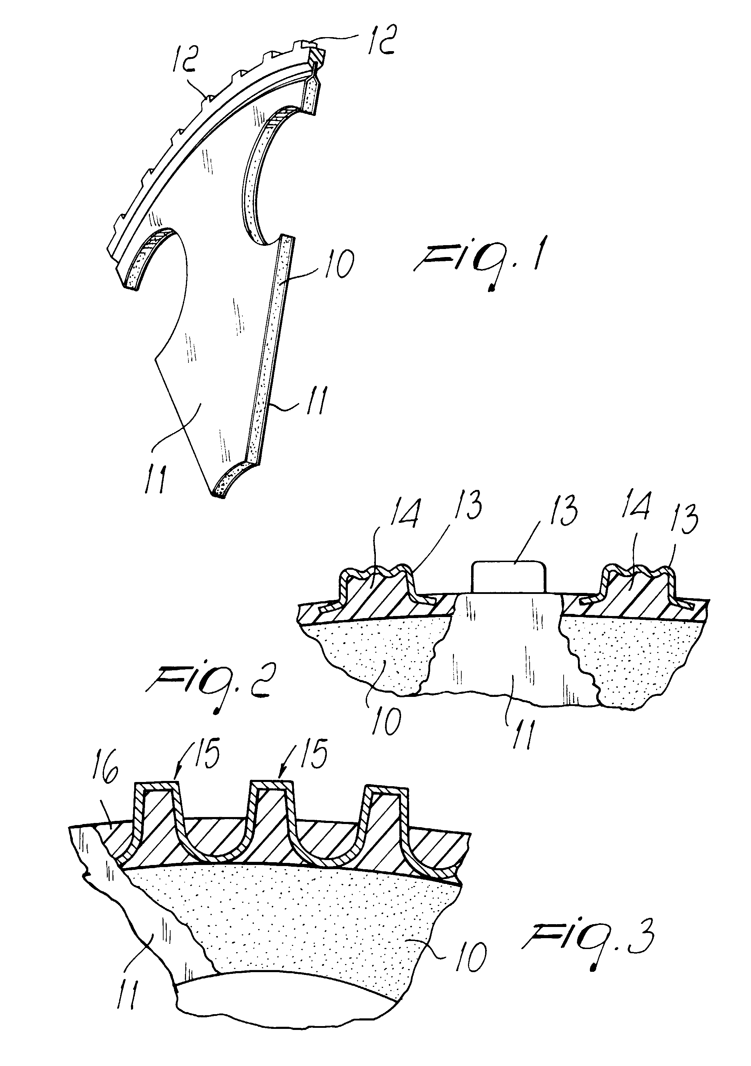

In order to at least partially solve these drawbacks, toothed wheels, shown in Figure 1, have been produced which have an internal core 10 of foamed material covered by skins 11 made of composite laminated material and with teeth 12 produced by overmolding thermoplastic material.

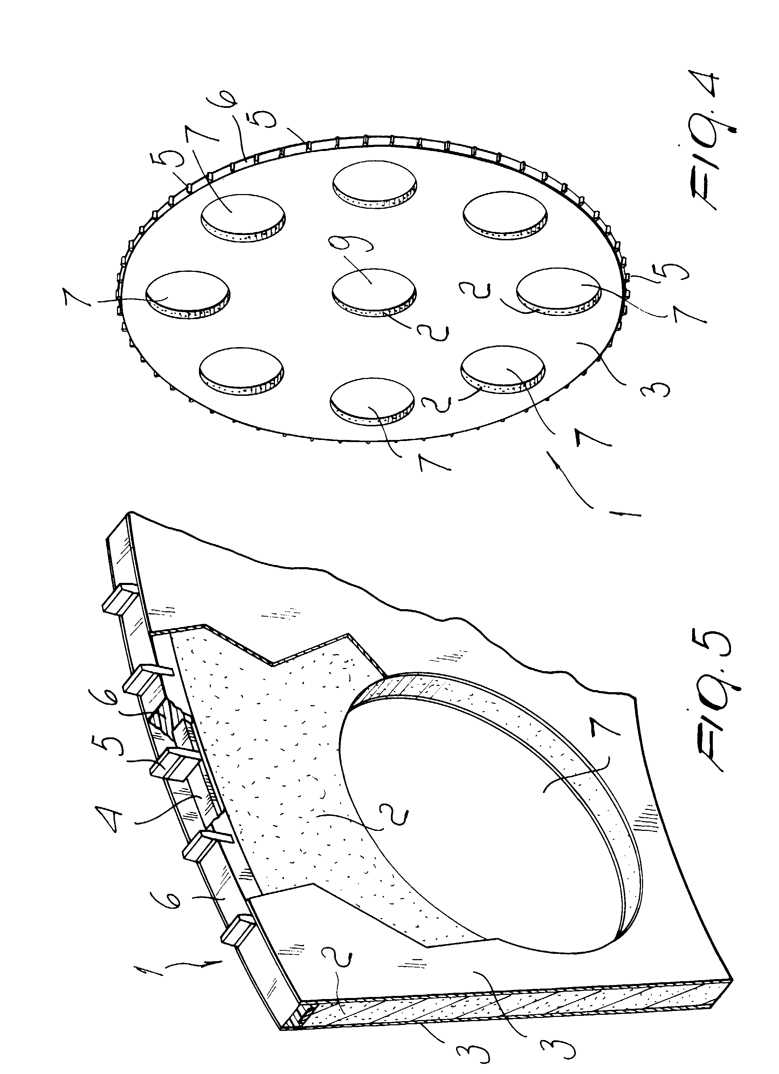

Other conventional solutions, illustrated in Figure 2, provide for a pre-molded structure which is constituted by an internal core, again designated by the reference numeral 10, which is made of foamed material, is covered by skins 11 made of composite laminated material, and has encapsulated teeth 13 produced by overmolding thermoplastic material 14 which constitutes the body of the tooth and rigidly couples the metal caps 13 to the toothed wheel.

Another solution, shown in Figure 3, provides for a structure which is constituted by an internal core 10 made of foamed material covered by skins made of composite laminated material and by a metal strip 15 which during the same molding step is partially embedded in synthetic resins 16, thus producing a set of teeth made of synthetic resins encapsulated in metal.

The aim of the present invention is to provide a toothed wheel, particularly for weaving looms and the like, wherein the toothed wheel and the teeth are produced during the same molding step and the teeth are not made of plastic material or of plastic material encapsulated in metal.

Within the scope of this aim, an object of the present invention is to provide a toothed wheel, particularly for weaving looms and the like, wherein the toothed wheel is lighter than conventional wheels and accordingly has less inertia and greater shape permanence.

Another object of the present invention is to provide a toothed wheel, particularly for weaving looms and the like, wherein the set of teeth is produced without using metal capsules or continuous covering laminations.

Within the scope of this aim, an object of the present invention is to provide a toothed wheel, particularly for weaving looms and the like, which is highly reliable, relatively easy to manufacture and at low costs.

This aim, these objects and others which will become apparent hereinafter are achieved by a toothed wheel, particularly for weaving looms and the like, comprising a disk-like element around which a toothed ring is arranged, characterized in that said toothed ring is made of metallic material and is embedded in said disk-like element, so as to allow metal teeth of said toothed ring to protrude in order to constitute the teeth of said toothed wheel.

Further characteristics and advantages of the present invention will become apparent from the following detailed description of preferred embodiments of the toothed wheel according to the invention, illustrated by way of nonlimitative example in the accompanying drawings, wherein:
Figure 1 is a perspective view of a portion of a toothed wheel according to the prior art;
Figure 2 is a sectional detail view of teeth encapsulated by overmolding according to the known art;
Figure 3 is a sectional detail view of another embodiment of the prior art;
Figure 4 is a perspective view of the toothed wheel according to the invention;
Figure 5 is a partial and partially cutout perspective detail view of a portion of the toothed wheel shown in Figure 4;
Figure 6 is a partial perspective view of a first embodiment of the set of teeth of the toothed wheel according to the invention;

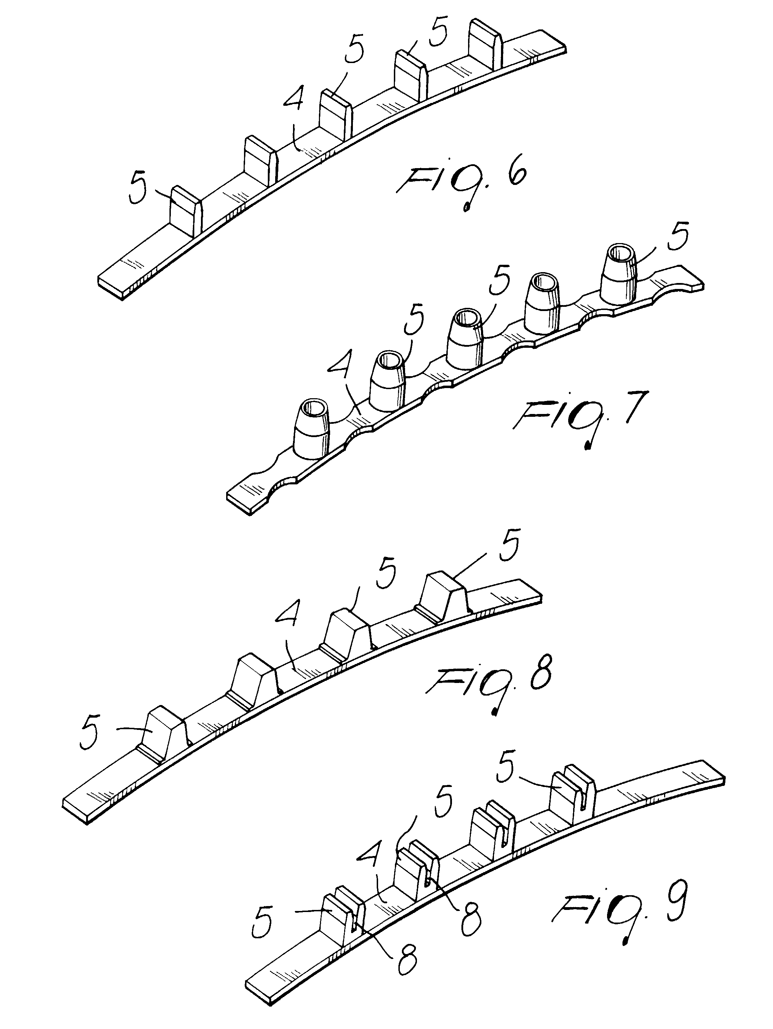

Figure 7 is a perspective view of a second embodiment of the set of teeth of the toothed wheel according to the invention;
Figure 8 is a view of a third embodiment of the set of teeth of the toothed wheel according to the invention; and
Figure 9 is a view of a fourth embodiment of the set of teeth of the toothed wheel according to the invention.

With reference to the above figures, the toothed wheel according to the invention, generally designated by the reference numeral 1, comprises a disk-like element which is constituted by an internal core 2 which is preferably made of foamed material and is covered with skins 3 made of composite fiber-reinforced synthetic resin laminated material.

The set of teeth of the toothed wheel is provided by applying a metal toothed ring 4 which is provided with multiple metal teeth 5.

The metal ring 4 is meant to be embedded simultaneously with the molding of the skins around the foamed core 2. The toothed ring 4 is accordingly embedded in the toothed wheel by means of the injection of synthetic resin 6, which penetrates between the teeth 5 of the toothed ring 4 and forms the structure of the toothed ring, in which the teeth 5 protrude from the edge of the wheel.

Figures 3 to 6 illustrate different embodiments of the toothed ring 4, with corresponding teeth 5 which, in a first embodiment shown in Figure 3, are substantially cusp-shaped; in the second embodiment, shown in Figure 4, the teeth are shaped like a truncated cone; in the third embodiment, shown in Figure 5, the teeth are shaped like a truncated pyramid; in Figure 6, the teeth are shaped so as to have a slot 8 arranged between two facing portions of the tooth 5.

The toothed wheel according to the invention also has a plurality of weight reducing holes 7 and a central hole 9 for coupling to a hub.

In this manner, the teeth of the toothed wheel are no longer made of synthetic material and then encapsulated with metal caps but are directly made of metal, improving their durability and simplifying the manufacture of the toothed wheel according to the invention.

In practice it has been observed that the toothed wheel according to the invention fully achieves the intended aim, since it can be manufactured with a reduced weight and therefore with less inertia and greater shape permanence, also providing a considerable improvement from the point of view of production costs.

The toothed wheel according to the invention is susceptible of numerous modifications and variations, all of which are within the scope of the inventive concept; all the details may also be replaced with other technically equivalent elements.

In practice, the materials employed, so long as they are compatible with the specific use, as well as the dimensions, may be any according to requirements and to the state of the art.

Thus, for example, the core of the toothed wheel can be made of materials other than foamed materials; likewise, the metallic material used to provide the toothed ring applied to the wheel can be of any kind, so long as it withstands the mechanical stresses to which the toothed wheel is subjected during its operation.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A toothed wheel, particularly for weaving looms and the like, comprising a disk-like element around which a toothed ring is arranged, characterized in that said toothed ring is made of metallic material and is embedded in said disk-like element, so as to allow metal teeth of said toothed ring to protrude in order to constitute the teeth of said toothed wheel.

2. The toothed wheel according to claim 1, characterized in that said disk-like element is constituted by a core around which skins made of composite fiber-reinforced synthetic resin laminated materials are applied.

3. The toothed wheel according to claim 2, characterized in that said toothed wheel is applied in contact with said core along the edge of said disk-like element and is embedded by using synthetic material.

4. The toothed wheel according to claim 2, characterized in that said core is made of foamed material.

5. The toothed wheel according to claim 1, characterized in that multiple holes are formed on the surface of said toothed wheel.
